# EUROPEAN PATENT APPLICATION

(11) **EP 3 138 421 A1**
(43) Date of publication of application: **08.03.2017**
(21) Application number: 14891073.0
(22) Date of filing: 30.04.2014
(51) Int. Cl.: A24F 47/00, G06F 3/041

(54) **ELECTRONIC CIGARETTE AND METHOD FOR PREVENTING DETERIORATION OF ELECTRONIC CIGARETTE LIQUID**

(71) Applicant: Huizhou Kimree Technology Co., Ltd. Shenzhen Branch, Guangdong 518000 (CN)
(72) Inventor: XIANG, Zhiyong, Huizhou Guangdong 516000 (CN)
(74) Representative: Studio Torta S.p.A.
(86) International application number: PCT/CN2014/076581
(87) International publication number: WO 2015/165065

(57) **Abstract**

An electronic cigarette and method for preventing the deterioration of the electronic cigarette liquid; both ends of an atomization assembly (104) are provided with valve assemblies (103) to control whether to enable the cigarette liquid in the atomization assembly (104) to contact external air; when a user smokes, an air flow sensor (102) senses the internal air pressure change of an electronic cigarette body (100), and transmits a pulse signal to a microcontroller (101); the microcontroller (101) transmits, according to the pulse signal, a first control signal to the valve assemblies (103) to open a valve, and controls the atomization assembly (104) to atomize the cigarette liquid to produce cigarette smoke; when the user stops smoking, the electronic cigarette body (100) has no air flow change therein, and the microcontroller (101) does not receive any pulse signal, and closes the valve assemblies (103) to enable the cigarette liquid in the atomization assembly (104) to be isolated from the external air, such that the cigarette liquid does not absorb moisture in the air to desaturate the cigarette liquid, thus preventing flavors and fragrances in the cigarette liquid from changing.

## Description

### FIELD

The present disclosure relates to the field of electronic cigarette, and particularly to an electronic cigarette and a method for preventing deterioration of electronic cigarette liquid.

### BACKGROUND

With becoming increasingly health-conscious, more and more people appreciate harmfulness of smoking. Therefore, electronic cigarettes, which are healthier than cigarettes, are becoming more popular.

The electronic cigarette in the conventional technology includes a cigarette smoking end, a battery rod assembly and an atomizer assembly. The battery rod assembly is connected with the atomizer assembly, and the other end of the atomizer assembly is connected with the cigarette smoking end. When a user smokes, an air flow sensor can senses a smoking action of the user, and then a controller in the electronic cigarette can control a heating wire assembly of the atomizer assembly to atomize cigarette liquid to produce cigarette smoke. The electronic cigarette simulates a whole smoking effect, so that the user fells like smoking a cigarette.

In the conventional electronic cigarette, cigarette liquid is in direct contact with ambient air. After the cigarette liquid of the electronic cigarette is deposited in contact with ambient air for a long time period, the cigarette liquid is desaturated since the cigarette liquid absorbs moisture in the air, and the cigarette liquid becomes off-taste since flavors and fragrances in the cigarette liquid are oxidated and decomposed when being in contact with the air.

### SUMMARY

An electronic cigarette and a method for preventing deterioration of electronic cigarette liquid are provided in the present disclosure.

An electronic cigarette is provided, which includes: an electronic cigarette body; and an air flow sensor, an atomizer assembly, a valve assembly, a battery assembly and a microcontroller which are provided in the electronic cigarette body. The microcontroller is configured to receive and recognize different pulse signals and transmit control signals in response to the different pulse signals. The air flow sensor is connected with the microcontroller, and is configured to detect air pressure in the electronic cigarette body and transmit a pulse signal to the microcontroller in a case of detection of a change in air pressure in the electronic cigarette body. The valve assembly is connected with the microcontroller, and is configured to enable cigarette liquid in the atomizer assembly to be isolated from ambient air, and upon reception of the control signal transmitted by the microcontroller, to enable the cigarette liquid to be supplied to a heating wire in the atomizer assembly to be atomized and/or enable an atomization chamber in the atomizer assembly to communicate with air outside the electronic cigarette, the atomization chamber being configured for atomizing the cigarette liquid. The atomizer assembly is connected with the microcontroller, and is configured to receive the control signal and atomize cigarette liquid to produce cigarette smoke. The battery assembly is configured to supply electric energy to the microcontroller, the air flow sensor, the atomizer assembly and the valve assembly.

A time delay module is further provided in the electronic cigarette body. The time delay module is connected with the microcontroller and the air flow sensor, and is configured to delay an open time instant for the valve assembly.

A switch module is further provided in the electronic cigarette body. The switch module is connected with the microcontroller, and is configured to control to open or close the valve assembly.

A key timing module is further provided in the electronic cigarette body. The key timing module is connected with the microcontroller, and is configured to set a time interval between opening the valve assembly and closing the valve assembly.

A voice module is further provided in the electronic cigarette body. The voice module is connected with the microcontroller, and is configured to inform a user of an operation state of the electronic cigarette and simulate a voice of burning tobacco.

A display module is further provided in the electronic cigarette body. The display module is connected with the microcontroller, and is configured to inform a user of an operation state of the electronic cigarette.

An overcurrent protection module is further provided in the electronic cigarette body. The overcurrent protection module is connected with the microcontroller, and is configured to prevent short circuit.

A low-voltage protection module is further provided in the electronic cigarette body. The low-voltage protection module is connected with the microcontroller, and is configured to detect a terminal voltage of the battery assembly.

A capacitive module is further provided in the electronic cigarette body. The capacitive module is connected with the microcontroller, and is configured to protect an electronic element in a circuit.

A cigarette ash light is provided outside the electronic cigarette body. The cigarette ash light is connected with the microcontroller, and is configured to simulate cigarette ash.

A charging ring and a charging pole are provided outside the electronic cigarette body. The charging ring is connected with a positive electrode of the battery assembly. The charging pole is connected with a negative electrode of the battery assembly. The charging ring and the charging pole charge a battery by a power supply.

An overvoltage protection module is further provided in the electronic cigarette body. The overvoltage protection module is connected with the microcontroller, and is configured to detect, when a battery is charged, a terminal voltage of the battery to prevent the terminal voltage from exceeding a threshold.

A method for preventing deterioration of electronic cigarette liquid is provided, which is applied to the electronic cigarette described above. The method includes transmitting a first pulse signal to the microcontroller by the air flow sensor in a case of detection of a raise in air pressure in the electronic cigarette body. The method further includes transmitting a first control signal to the valve assembly and transmitting a second control signal to the atomizer assembly by the microcontroller in response to the first pulse signal. The method further includes opening a valve by the valve assembly in response to the first control signal, to enable cigarette liquid to be supplied to a heating wire in the atomizer assembly to be atomized and/or enable an atomization chamber in the atomizer assembly to communicate with air outside the electronic cigarette, and atomizing the cigarette liquid by the atomizer assembly in response to the second control signal to produce cigarette smoke, the atomization chamber being configured for atomizing the cigarette liquid. The method further includes transmitting a second pulse signal to the microcontroller by the air flow sensor in a case of detection of air pressure in the electronic cigarette body returning to constant pressure; transmitting a third control signal to the atomizer assembly and transmitting a fourth control signal to the valve assembly by the microcontroller in response to the second pulse signal. The method further includes stopping atomizing the cigarette liquid by the atomizer assembly in response to the third control signal, and closing the valve by the valve assembly in response to the fourth control signal to enable the cigarette liquid in the atomizer assembly to be isolated from ambient air.

The method further includes transmitting a second pulse signal to the time delay module by the air flow sensor in a case of detection of the air pressure in the electronic cigarette body returning to constant pressure. The method further includes transmitting the second pulse signal to the microcontroller by the time delay module after delaying for a preset time period.

The method further includes transmitting a third pulse signal to the microcontroller by the switch module. The method further includes transmitting a first control signal to the valve assembly by the microcontroller in response to the third pulse signal. The method further includes opening the valve by the valve assembly in response to the first control signal, to enable the cigarette liquid to be supplied to the atomizer assembly to be atomized.

The method further includes transmitting a fourth pulse signal to the microcontroller by the switch module. The method further includes transmitting a fourth control signal to the valve assembly by the microcontroller in response to the fourth pulse signal. The method further includes closing the valve by the valve assembly in response to the fourth control signal, to enable the cigarette liquid in the atomizer assembly to be isolated from ambient air.

The method further includes transmitting a fifth pulse signal to the microcontroller by the key timing module in response to key input of a user. The method further includes transmitting a first control signal to the valve assembly by the microcontroller in response to the fifth pulse signal. The method further includes opening the valve by the valve assembly in response to the first control signal, to enable the cigarette liquid to be supplied to the atomizer assembly to be atomized. The method further includes transmitting a sixth pulse signal to the microcontroller by the key timing module in response to key input of the user. The method further includes transmitting a fourth control signal to the valve assembly by the microcontroller in response to the sixth pulse signal. The method further includes closing the valve by the valve assembly in response to the fourth control signal, to enable the cigarette liquid in the atomizer assembly to be isolated from ambient air. The method further includes recording a time interval between the fifth pulse signal and the sixth pulse signal by the key timing module.

It can be seen from the technical solutions described above that the embodiments of the present disclosure have advantages as follows.

In the present disclosure, the valve assembly is provided at two terminals of the atomizer assembly, to control whether to enable the cigarette liquid in the atomizer assembly to be in contact with ambient air. When a user smokes the electronic cigarette, the air flow sensor transmits a pulse signal to the microcontroller in a case of detection of a change in air pressure in the electronic cigarette body. The microcontroller transmits a first control signal to the valve assembly in response to the pulse signal to open the valve, to enable the cigarette liquid to be supplied to the heating wire in the atomizer assembly to be atomized and/or enable a atomization chamber in the atomizer assembly to communicate with air outside the electronic cigarette, the atomization chamber being configured for atomizing the cigarette liquid. The atomizer assembly is controlled to atomize the cigarette liquid to produce cigarette smoke. When the user ends smoking, no air flow change occurs in the electronic cigarette body, no pulse signal is received by the microcontroller, and the valve assembly is closed, to enable the cigarette liquid in the atomizer assembly to be isolated from the ambient air. With this, the cigarette liquid does not absorb moisture in the air to become desarurated, thereby preventing flavors and fragrances in the cigarette liquid from becoming off-taste.

### BRIEF DESCRIPTION OF THE DRAWINGS

The drawings to be used in the description of the embodiments of the present disclosure or the conventional technology will be described briefly as follows, so that the technical solutions according to the embodiments of the present disclosure or according to the conventional technology will become clearer. It is apparent that the drawings in the following description only illustrate some embodiments of the present application. For those skilled in the art, other drawings may be obtained according to these drawings without any creative work.
Figure 1 is a schematic diagram illustrating an overall structural of an electronic cigarette according to the present disclosure;
Figure 2 is a schematic diagram of an electronic cigarette according to an embodiment of the present disclosure;
Figure 3 is a schematic diagram of an electronic cigarette according to another embodiment of the present disclosure;
Figure 4 is a schematic diagram of an electronic cigarette according to another embodiment of the present disclosure;
Figure 5 is a schematic diagram of an electronic cigarette according to another embodiment of the present disclosure;
Figure 6 is a schematic diagram of an electronic cigarette according to another embodiment of the present disclosure;
Figure 7 is a schematic diagram illustrating a principle of an electronic cigarette according to another embodiment of the present disclosure; and
Figure 8 is a schematic diagram of a method for preventing deterioration of electronic cigarette liquid according to an embodiment of the present disclosure.

### DETAILED DESCRIPTION OF THE EMBODIMENTS

Technical solutions according to embodiments of the present disclosure are described clearly and completely hereinafter in conjunction with drawings in the embodiments of the present disclosure. Apparently, the described embodiments are only some embodiments of the present disclosure rather than all the embodiments. Any other embodiments obtained by those skilled in the art based on the embodiments of the present disclosure without any creative work fall in the scope of protection of the present disclosure.

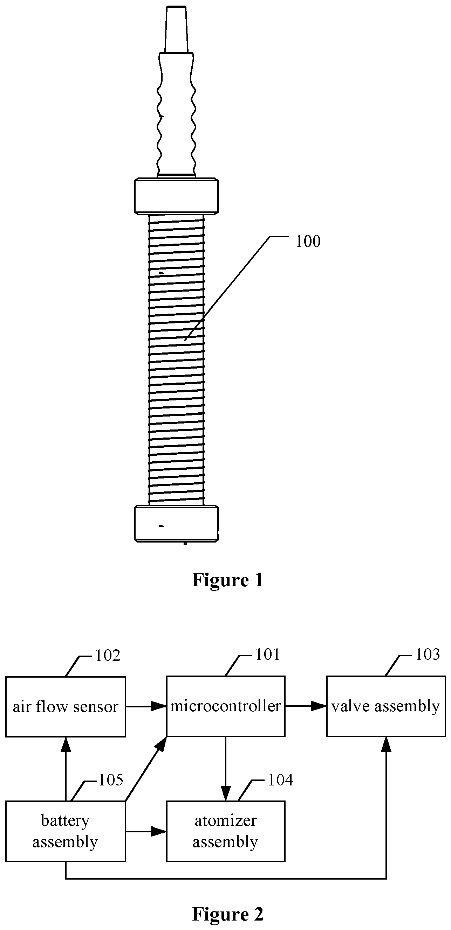

An electronic cigarette and a method for preventing deterioration of electronic cigarette liquid are provided in the present disclosure. Figure 1 and Figure 2 shows a structure of the electronic cigarette.

The electronic cigarette includes: an electronic cigarette body 100; and an air flow sensor 102, an atomizer assembly 104, a valve assembly 103, a battery assembly 105 and a microcontroller 101 provided in the electronic cigarette body 100. The microcontroller 101 is configured to receive and recognize different pulse signals, and transmit control signals in response to the different pulse signals.

The air flow sensor 102 is connected with the microcontroller 101, and is configured to detect air pressure in the electronic cigarette body and transmit a pulse signal to the microcontroller 101 in a case of detection of a change in air pressure in the electronic cigarette body.

The valve assembly 103 is connected with the microcontroller 101, and is configured to enable cigarette liquid in the atomizer assembly 104 to be isolated from ambient air, and upon reception of the control signal transmitted by the microcontroller 101, to enable the cigarette liquid to be supplied to a heating wire in the atomizer assembly to be atomized and/or enable a atomization chamber in the atomizer assembly 104 to communicate with air outside the electronic cigarette, the atomization chamber being configured for atomizing the cigarette liquid. That is, the valve assembly 103 is provided at a liquid outlet of a liquid storage chamber of the atomizer assembly 104, or is provided at a smoke outlet of the atomizer assembly 104, to prevent the cigarette liquid in the atomizer assembly 104 from being in contact with ambient air outside the electronic cigarette. In practical, the structure of the electronic cigarette is not limited thereto. In the embodiment, a structure in which the valve assembly 103 is provided at the liquid outlet of the liquid storage chamber of the atomizer assembly 104 is taken as an example.

The atomizer assembly 104 is connected with the microcontroller 103, and is configured to receive the control signal and atomize the cigarette liquid to produce cigarette smoke.

The battery assembly 105 is configured to supply electric energy to the microcontroller 101, the air flow sensor 102, the atomizer assembly 104 and the valve assembly 103.

In the embodiment, when a user smokes the electronic cigarette, the air flow sensor 102 transmits a pulse signal to the microcontroller 101 in a case of detection of a raise in air pressure in the electronic cigarette body.

The microcontroller 101 transmits a control signal to the valve assembly 103 and the atomizer assembly 104 in response to the pulse signal respectively.

The valve assembly 103 opens a valve in response to the control signal, to enable the cigarette liquid in the atomizer assembly 104 to be in contact with air. The atomizer assembly 104 atomizes the cigarette liquid in response to the control signal, to produce cigarette smoke.

In the embodiment, the valve assembly 103 opens the valve first to enable the cigarette liquid in the atomizer assembly 104 to be in contact with ambient air, and enable the cigarette liquid to be supplied to the atomizer assembly 104. The atomizer assembly 104 atomizes the cigarette liquid to produce cigarette smoke.

When the user stops smoking, the air flow sensor 102 transmits a pulse signal to the microcontroller 101 in a case of detection of air pressure in the electronic cigarette body returning to constant pressure.

The microcontroller 101 transmits a control signal to the atomizer assembly 104 and the valve assembly 103 in response to the pulse signal respectively.

The atomizer assembly 104 stops atomizing cigarette liquid in response to the control signal. The valve assembly 103 closes the valve in response to the control signal, to enable the cigarette liquid in the atomizer assembly 104 to be isolated from the ambient air.

In this way, the valve assembly 103 closes the valve to enable the cigarette liquid in the atomizer assembly 104 to be isolated from the outside, so that the cigarette liquid does not absorb moisture in the ambient air to become desaturated, thereby preventing flavors and fragrances in the cigarette liquid from becoming off-taste.

In order to more fully illustrate the present disclosure, the present disclosure is described below in several embodiments. A first embodiment or a second embodiment described below is only to distinguish embodiments, and is not used to limit. Technical solutions of the embodiments can be used in combination or separately. In the embodiment below, the battery assembly is used to supply electric energy for components, which is not described repeatedly anymore.

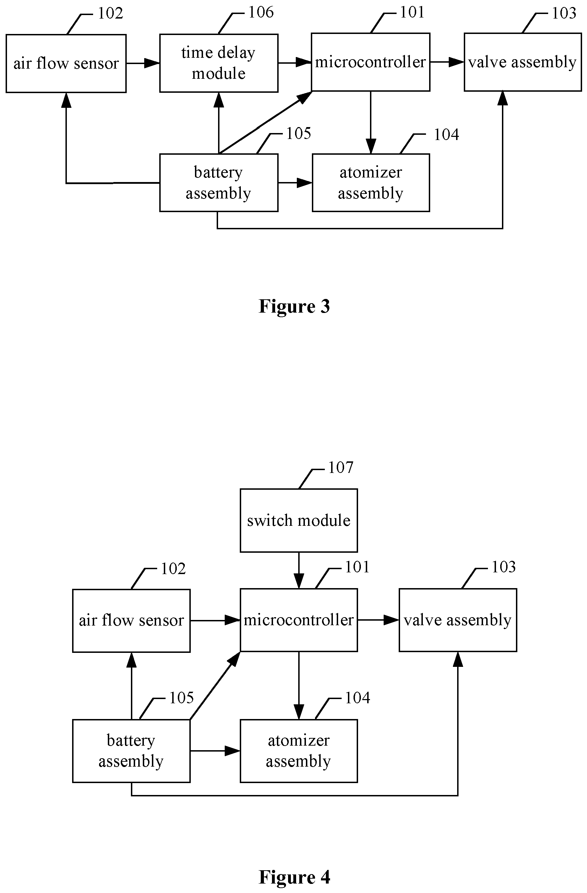

The first embodiment is shown in conjunction with Figure 3. In the first embodiment, a time delay module 106 is further provided in the electronic cigarette body 100.

The time delay module 106 is connected with the microcontroller 101 and the air flow sensor 102, and is configured to delay an open time instant for the valve assembly 103.

When a user ends smoking the electronic cigarette, air pressure in the electronic cigarette body 100 returns to constant pressure. The air flow sensor 102 transmits a pulse signal to the time delay module 106 in a case of detection of the air pressure in the electronic cigarette body returning to constant pressure.

The time delay module 106 transmits the pulse signal to the microcontroller 101 after delaying for a preset time period.

In this way, a close time instant for the valve assembly is delayed, to reduce a switching frequency of the valve assembly, thereby saving electric energy.

In a case that the user starts smoking the electronic cigarette again before the time delay module 103 transmits the pulse signal for closing the valve assembly to the microcontroller 101, the air flow sensor 102 detects air pressure in the electronic cigarette body, and it indicates that the atomizer assembly 104 can continue atomizing the cigarette liquid to produce cigarette smoke, then the valve assembly 103 keeps opening the valve. That is, the time delay module 106 functions to delay only the pulse signal for closing the valve assembly, but not the pulse signal for opening the valve assembly.

A second embodiment is shown in conjunction with Figure 4. In the embodiment, a switch module 107 is further provided in the electronic cigarette body 100.

The switch module 107 is connected with the microcontroller 101, and is configured to control to open or close the valve assembly 103.

The user may initiate the switch module 107 to transmit a pulse signal to the microcontroller 101.

The microcontroller 101 transmits a control signal to the valve assembly 103 in response to the pulse signal.

The valve assembly 103 opens the valve in response to the control signal, to enable the cigarette liquid to be supplied to the atomizer assembly to be atomized.

The user initiates the switch module 107 again to transmit a pulse signal to the microcontroller 101.

The microcontroller 101 transmits a control signal to the valve assembly 103 in response to the pulse signal.

The valve assembly 103 closes the valve in response to the control signal, to enable the cigarette liquid in the atomizer assembly 104 to be isolated from ambient air.

The switch module 107 may be implemented as a button switch or a transfer switch provided outside the electronic cigarette body 100, which is not intended to limiting here. The user may control to open or close the valve assembly 103 manually, for making use easier.

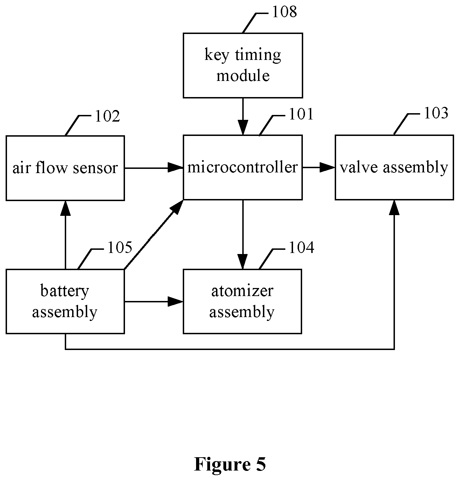

A third embodiment is shown in conjunction with Figure 5. In the embodiment, a key timing module 108 is further provided in the electronic cigarette body 100.

The key timing module 108 is connected with the microcontroller 101, and is configured to set a time interval between opening the valve assembly 103 and closing the valve assembly 103.

The key timing module 108 transmits an open pulse signal to the microcontroller 101 in response to key input of the user.

The microcontroller 101 transmits a control signal to the valve assembly 103 in response to the open pulse signal.

The valve assembly 103 opens the valve in response to the control signal, to enable the cigarette liquid to be supplied to the atomizer assembly to be atomized.

The key timing module 108 transmits a close pulse signal to the microcontroller 101 in response to key input of the user.

The microcontroller 101 transmits a control signal to the valve assembly 103 in response to the close pulse signal.

The valve assembly 103 closes the valve in response to the control signal, to enable the cigarette liquid in the atomizer assembly 104 to be isolated from ambient air.

The key timing module 108 records a time interval between the open pulse signal and the close pulse signal.

In the embodiment, the user can set an open time instant and a close time instant for the valve assembly by the key timing module 108 manually, for making use easier.

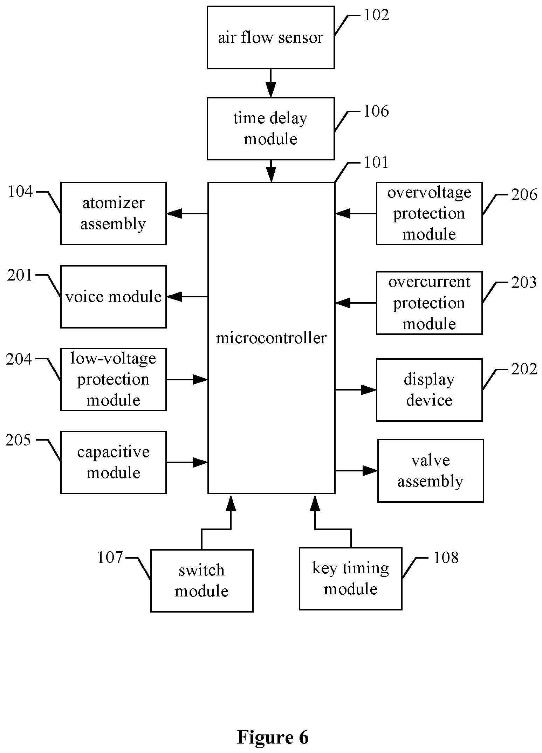

A fourth embodiment is shown in conjunction with Figure 6. In the embodiment, the embodiments described above are used in combination, and function modules as follows are added. The following function modules may be added separately or in combination, which is not intended to limiting here. In the embodiment, following function components are added for achieving multiple functions and easier use of the electronic cigarette.

A voice module 201 is further provided in the electronic cigarette body 100. The voice module 201 is connected with the microcontroller 101, and is configured to inform the user of an operation state of the electronic cigarette. The voice module may be configured to voice broadcast an open/close state of the valve assembly 103.

A display module 202 is further provided in the electronic cigarette body 100. The display module 202 is connected with the microcontroller 101, and is configured to inform the user of an operation state of the electronic cigarette. LED lights with different colors may be used in the display module 202 to display the operation state of the electronic cigarette.

An overcurrent protection module 203 is further provided in the electronic cigarette body 100. The overcurrent protection module 203 is connected with the microcontroller 101, and is configured to prevent short circuit, for protecting elements in the circuit.

A low-voltage protection module 204 is further provided in the electronic cigarette body 100. The low-voltage protection module 204 is connected with the microcontroller 101, and is configured to detect a terminal voltage of the battery assembly 105. In a case of low battery of the battery assembly 105, the low-voltage protection module 204 transmits a signal to the microcontroller 101, to inform a user to charge the battery assembly 105.

A capacitive module 205 is further provided in the electronic cigarette body 100. The capacitive module 205 is connected with the microcontroller 101, and is configured to protect electronic elements within the circuit.

A cigarette ash light is provided outside the electronic cigarette body 100. The cigarette ash light is connected with the microcontroller 101. When a user smokes the electronic cigarette, the cigarette ash light may simulate twinkle like cigarette ash of a cigarette, to strengthen feeling of smoking the electronic cigarette.

A charging ring and a charging pole are provided outside the electronic cigarette body 100. The charging ring is connected with a positive electrode of the battery assembly 105, and the charging pole is connected to a negative electrode of the battery assembly 105. The charging ring and the charging pole are provided at one terminal of the electronic cigarette body 100, which is not intended to limiting here. When charging the battery assembly 105, a battery is not required to be taken out, which is not like the electronic cigarette in the conventional technology. In the embodiment, the battery assembly 105 can be charged by the charging ring, the charging pole and a charging cradle matching with the electronic cigarette, without taking out the battery.

An overvoltage protection module 206 is further provided in the electronic cigarette body 100. The overvoltage protection module 206 is connected with the microcontroller 101, and is configured to detect, when a battery is charged, a terminal voltage of the battery to prevent the terminal voltage from exceeding a threshold. For example, the terminal voltage of the battery assembly 105 is 24v, and in a case that the terminal voltage of the battery reaches the value of 24v when the battery is charged, the overvoltage protection module 206 informs, via the microcontroller, the user that the charging of the battery is completed.

In the embodiment, in addition to the modules described above, the electronic cigarette body further includes a time delay module 106, a switch module 107 and a key timing module 108, for extending the function of the electronic cigarette and enriching user experience.

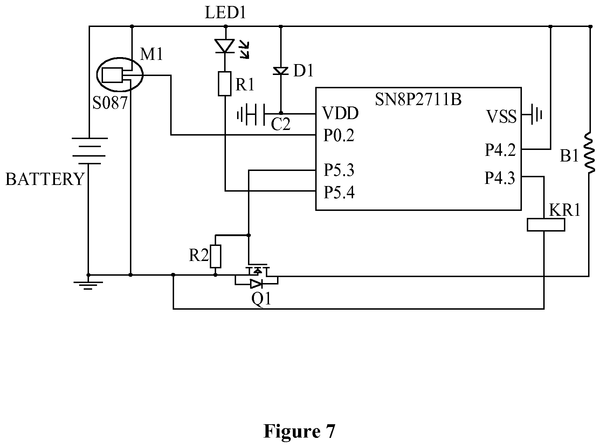

An operation principle of a circuit in the electronic cigarette body is described in an embodiment with reference to Figure 7, to further illustrate the present disclosure.

In the embodiment, a model number of the microcontroller 101 in Figure 7 may be SN8P2711B, a model number of the air flow sensor 102 may be S087, the air flow sensor 102 is connected with the microcontroller 101, and a valve assembly is provided at two terminals of the atomizer assembly 104 to control whether to enable cigarette liquid in the atomizer assembly 103 to be in contact with ambient air. When the valve is closed, the cigarette liquid is sealed. When a user smokes, the air flow sensor 102 generates a trigger signal, so that the microcontroller 101 transmits a control instruction to enable the valve assembly 103 to open the valve. When a user stops smoking, the air flow sensor 102 does not generate a trigger signal, the valve assembly 103 is closed automatically.

When a user smokes, the air flow sensor 102, i.e. M1, transmits a smoking signal to the microcontroller 101. The microcontroller 101 outputs a high-level signal, to control an electromagnet relay KR1 in the valve assembly 103 to be switched on, and thus open the valve. The cigarette liquid in the atomizer assembly 104 becomes in contact with ambient air. An field effect tube Q1 in the switch component is switched on, so that the battery 105, BATTERY, supplies power to a heating wire B1 of the atomizer assembly 104, to enable the heating wire B1 to atomize the cigarette liquid. The cigarette ash light LED1 is turned on for simulating burning of the cigarette. In this way, the user smokes the electronic cigarette.

When the user ends smoking, no air flow flows through the air flow sensor 102, no smoking signal is received by the microcontroller 101, and the microcontroller 101 outputs a low-level signal by default, to control the electromagnet relay KR1 in the valve assembly 103 to be switched off, and thus close the valve. In this way, the cigarette liquid is isolated from the ambient air, thereby protecting the cigarette liquid from becoming off-taste.

In the embodiment, the capacitive module 205, i.e. C2, supplies power to the microcontroller 101 when the heating wire is short-circuited, so that the microcontroller 101 has a buffer time for closing the field effect tube, thereby avoiding danger situation.

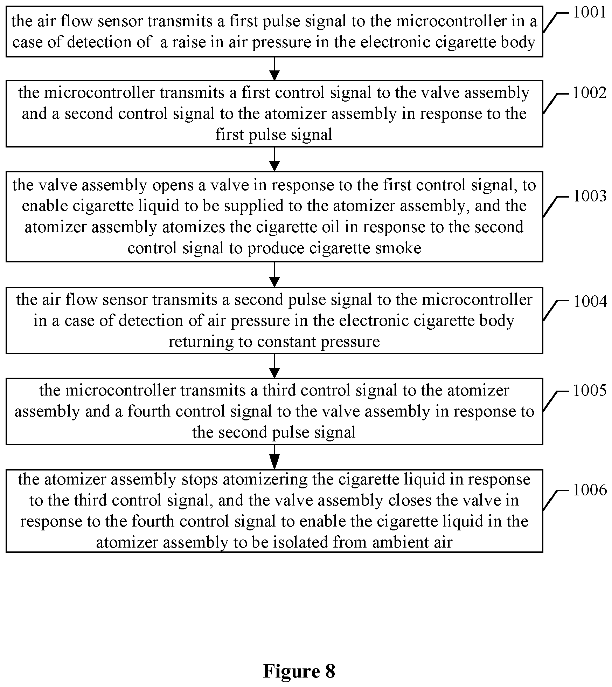

A method for deterioration of electronic cigarette liquid is further provided in the present disclosure. Referring to Figure 8, the method includes steps 1001 to 1006.

In step 1001, the air flow sensor transmits a first pulse signal to the microcontroller in a case of detection of a raise in air pressure in the electronic cigarette body.

In step 1002, the microcontroller transmits a first control signal to the valve assembly and transmits a second control signal to the atomizer assembly in response to the first pulse signal.

In step 1003, the valve assembly opens a valve in response to the first control signal, to enable cigarette liquid to be supplied to the atomizer assembly, and the atomizer assembly atomizes the cigarette liquid in response to the second control signal, to produce cigarette smoke. Alternatively, the cigarette liquid may be supplied to the heating wire in the atomization chamber in the atomizer assembly normally in a non-smoking state, the valve assembly is provided at a smoke outlet of the atomizer assembly, the valve assembly opens the valve in response to the first control signal, to enable the atomization chamber in the atomizer assembly to communicate with air outside the electronic cigarette, the atomization chamber being configured for atomizing the cigarette liquid, which is not intended to limiting here.

In step 1004, the air flow sensor transmits a second pulse signal to the microcontroller in a case of detection of air pressure in the electronic cigarette body returning to constant pressure.

In step 1005, the microcontroller transmits a third control signal to the atomizer assembly and transmits a fourth control signal to the valve assembly in response to the second pulse signal.

In step 1006, the atomizer assembly stops atomizing the cigarette liquid in response to the third control signal, and the valve assembly closes the valve in response to the fourth control signal, to enable the cigarette liquid in the atomizer assembly to be isolated from ambient air.

In the method described above, when the user smokes the electronic cigarette, the air flow sensor transmits a pulse signal to the microcontroller in a case of detection of a change in air pressure in the electronic cigarette body, the microcontroller, in response to the pulse signal, transmits a first control signal to the valve assembly to open the valve and controls the atomizer assembly to atomize the cigarette liquid to produce cigarette smoke. When the user ends smoking, no air flow change occurs in the electronic cigarette body, no pulse signal is received by the microcontroller, and the valve assembly is closed, to enable the cigarette liquid in the atomizer assembly to be isolated from ambient air, so that the cigarette liquid does not absorb moisture in air to become desaturated, thereby preventing flavors and fragrances in the cigarette liquid from becoming off-taste.

In the embodiment, the method further includes: transmitting a second pulse signal to the time delay module by the air flow sensor in a case of detection of air pressure in the electronic cigarette body returning to constant pressure; and transmitting the second pulse signal to the microcontroller by the time delay module after delaying for a set time period.

In this way, a close time instant for the valve assembly is delayed, to reduce a switching frequency of the valve assembly, thereby saving electric energy.

The method further includes: transmitting a third pulse signal to the microcontroller by the switch module; transmitting a first control signal to the valve assembly by the microcontroller in response to the third pulse signal; and opening the valve by the valve assembly in response to the first control signal, to enable the cigarette liquid to be supplied to the atomizer assembly to be atomized.

The switch module transmits a fourth pulse signal to the microcontroller.

The microcontroller transmits a fourth control signal to the valve assembly in response to the fourth pulse signal.

The valve assembly closes the valve in response to the fourth control signal, to enable the cigarette liquid in the atomizer assembly to be isolated from ambient air.

In the embodiment, the user can control to open or close the valve assembly manually, for making use easier.

The method further includes: transmitting a fifth pulse signal to the microcontroller by the key timing module in response to key input of the user; transmitting a first control signal to the valve assembly by the microcontroller in response to the fifth pulse signal; and opening the valve by the valve assembly in response to the first control signal, to enable the cigarette liquid to be supplied to the atomizer assembly to be atomized.

The key timing module transmits a sixth pulse signal to the microcontroller in response to key input of the user.

The microcontroller transmits a fourth control signal to the valve assembly in response to the sixth pulse signal.

The valve assembly closes the valve in response to the fourth control signal, to enable the cigarette liquid in the atomizer assembly to be isolated from ambient air.

The key timing module records a time interval between the fifth pulse signal and the sixth pulse signal.

In the embodiment, the user can set an open time instant or a close time instant for the valve assembly via the key timing module manually, for making use easier.

The above embodiments are described in a progressive manner. Each of the embodiments is mainly focused on describing its differences from other embodiments, and references may be made among these embodiments with respect to the same or similar portions among these embodiments.

With the above descriptions of the disclosed embodiments, the skilled in the art may practice or use the present disclosure. Various modifications to the embodiments are apparent for the skilled in the art. The general principle suggested herein can be implemented in other embodiments without departing from the spirit or scope of the disclosure. Therefore, the present disclosure should not be limited to the embodiments disclosed herein, but has the widest scope that is conformity with the principle and the novel features disclosed herein.

## Claims

1. An electronic cigarette, comprising:
an electronic cigarette body (100); and
an air flow sensor (102), an atomizer assembly (104), a valve assembly (103), a battery assembly (105) and a microcontroller (101) which are provided in the electronic cigarette body (100), the microcontroller (101) being configured to receive and recognize different pulse signals and transmit control signals in response to the different pulse signals, wherein
the air flow sensor (102) is connected with the microcontroller (101), and is configured to detect air pressure in the electronic cigarette body and transmit a pulse signal to the microcontroller (101) in a case of detection of a change in air pressure in the electronic cigarette body,
the valve assembly (103) is connected with the microcontroller (101), and is configured to enable cigarette liquid in the atomizer assembly (104) to be isolated from ambient air, and upon reception of the control signal transmitted by the microcontroller (101), to enable the cigarette liquid to be supplied to a heating wire in the atomizer assembly (104) to be atomized and/or enable a atomization chamber in the atomizer assembly (104) to communicate with air outside the electronic cigarette, the atomization chamber being configured for atomizing the cigarette liquid,
the atomizer assembly (104) is connected with the microcontroller (101), and is configured to receive the control signal and atomize cigarette liquid to produce cigarette smoke, and
the battery assembly (105) is configured to supply electric energy to the microcontroller (101), the air flow sensor (102), the atomizer assembly (104) and the valve assembly (103).

2. The electronic cigarette according to claim 1, wherein a time delay module (106) is further provided in the electronic cigarette body (100), and the time delay module (106) is connected with the microcontroller (101) and the air flow sensor (102) and is configured to delay an open time instant for the valve assembly (103).

3. The electronic cigarette according to claim 1, wherein a switch module (107) is further provided in the electronic cigarette body (100), and the switch module (107) is connected with the microcontroller (101) and is configured to control to open or close the valve assembly (103).

4. The electronic cigarette according to claim 1, wherein a key timing module (108) is further provided in the electronic cigarette body (100), and the key timing module (108) is connected with the microcontroller (101) and is configured to set a time interval between opening the valve assembly (103) and closing the valve assembly (103).

5. The electronic cigarette according to claim 1, wherein a voice module (201) is further provided in the electronic cigarette body (100), and the voice module (201) is connected with the microcontroller (101) and is configured to inform a user of an operation state of the electronic cigarette.

6. The electronic cigarette according to claim 1, wherein a display module (202) is further provided in the electronic cigarette body (100), and the display module (201) is connected with the microcontroller (101) and is configured to inform a user of an operation state of the electronic cigarette.

7. The electronic cigarette according to claim 1, wherein an overcurrent protection module (203) is further provided in the electronic cigarette body (100), and the overcurrent protection module (203) is connected with the microcontroller (101) and is configured to prevent short circuit.

8. The electronic cigarette according to claim 1, wherein a low-voltage protection module (204) is further provided in the electronic cigarette body (100), and the low-voltage protection module (204) is connected with the microcontroller (101) and is configured to detect a terminal voltage of the battery assembly (105).

9. The electronic cigarette according to claim 1, wherein a capacitive module (205) is further provided in the electronic cigarette body (100), and the capacitive module (205) is connected with the microcontroller (101) and is configured to protect an electronic element in a circuit.

10. The electronic cigarette according to claim 1, wherein a cigarette ash light is provided outside the electronic cigarette body (100), and the cigarette ash light is connected with the microcontroller (101) and is configured to simulate cigarette ash.

11. The electronic cigarette according to claim 1, wherein a charging ring and a charging pole are provided outside the electronic cigarette body (100), the charging ring is connected with a positive electrode of the battery assembly (105), and the charging pole is connected with a negative electrode of the battery assembly (105), the charging ring and the charging pole charge a battery by a power supply.

12. The electronic cigarette according to claim 1, wherein an overvoltage protection module (206) is further provided in the electronic cigarette body (100), and the overvoltage protection module (206) is connected with the microcontroller (101), and is configured to detect, when a battery is charged, a terminal voltage of the battery to prevent the terminal voltage from exceeding a threshold.

13. A method for preventing deterioration of electronic cigarette liquid, applied to the electronic cigarette according to claim 1, the method comprising:
transmitting a first pulse signal to the microcontroller by the air flow sensor in a case of detection of a raise in air pressure in the electronic cigarette body;
transmitting a first control signal to the valve assembly and a second control signal to the atomizer assembly by the microcontroller in response to the first pulse signal;
opening a valve by the valve assembly in response to the first control signal, to enable cigarette liquid to be supplied to a heating wire in the atomizer assembly to be atomized and/or enable a atomization chamber in the atomizer assembly to communicate with air outside the electronic cigarette, and atomizing the cigarette liquid by the atomizer assembly in response to the second control signal to produce cigarette smoke, the atomization chamber being configured for atomizing the cigarette liquid;
transmitting a second pulse signal to the microcontroller by the air flow sensor in a case of detection of air pressure in the electronic cigarette body returning to constant pressure;
transmitting a third control signal to the atomizer assembly and a fourth control signal to the valve assembly by the microcontroller in response to the second pulse signal; and
stopping atomizing the cigarette liquid by the atomizer assembly in response to the third control signal, and closing the valve by the valve assembly in response to the fourth control signal to enable the cigarette liquid in the atomizer assembly to be isolated from ambient air.

14. The method for preventing deterioration of electronic cigarette liquid according to claim 13, further comprising:
transmitting a second pulse signal to the time delay module by the air flow sensor in a case of detection of air pressure in the electronic cigarette body returning to constant pressure; and
transmitting the second pulse signal to the microcontroller by the time delay module after delaying for a preset time period.

15. The method for preventing deterioration of electronic cigarette liquid according to claim 13, further comprising:
transmitting a third pulse signal to the microcontroller by the switch module;
transmitting a first control signal to the valve assembly by the microcontroller in response to the third pulse signal; and
opening the valve by the valve assembly in response to the first control signal, to enable the cigarette liquid to be supplied to the atomizer assembly to be atomized.

16. The method for preventing deterioration of electronic cigarette liquid according to claim 13, further comprising:
transmitting a fourth pulse signal to the microcontroller by the switch module;
transmitting a fourth control signal to the valve assembly by the microcontroller in response to the fourth pulse signal; and
closing the valve by the valve assembly in response to the fourth control signal, to enable the cigarette liquid in the atomizer assembly to be isolated from ambient air.

17. The method for preventing deterioration of electronic cigarette liquid according to claim 13, further comprising:
transmitting a fifth pulse signal to the microcontroller by the key timing module in response to key input of a user;
transmitting a first control signal to the valve assembly by the microcontroller in response to the fifth pulse signal;
opening the valve by the valve assembly in response to the first control signal, to enable the cigarette liquid to be supplied to the atomizer assembly to be atomized;
transmitting a sixth pulse signal to the microcontroller by the key timing module in response to key input of the user;
transmitting a fourth control signal to the valve assembly by the microcontroller in response to the sixth pulse signal;
closing the valve by the valve assembly in response to the fourth control signal, to enable the cigarette liquid in the atomizer assembly to be isolated from ambient air; and
recording a time interval between the fifth pulse signal and the sixth pulse signal by the key timing module.
